# EUROPEAN PATENT SPECIFICATION

(11) **EP 2 786 654 B1**
(45) Date of publication and mention of the grant of the patent: **20.09.2017**
(21) Application number: 14157490.5
(22) Date of filing: 03.03.2014
(51) Int. Cl.: A01K 1/04, A01K 27/00

(54) **Leash**
Leine
Laisse

(30) Priority: 20.03.2013 US 201313847495
(43) Date of publication of application: 08.10.2014
(73) Proprietor: Bianchi, Emanuele, Chicago, IL 60603 (US)
(72) Inventor: Bianchi, Emanuele, Chicago, IL 60603 (US)
(74) Representative: chapman + co

(56) References cited:
- DE-U1-202005 015 014
- US-A- 2 737 154
- US-A- 4 777 784
- US-A1- 2009 188 441

## Description

### Field of the invention

The present invention relates generally to a leash. Embodiments of the present invention relate to a stretchable animal leash with endpoint connector, and more particularly to a leash for attaching an animal to a vehicle safely. More particularly, embodiments of the present invention relate to stretchable leashes which may be attached to a vehicle such as a bicycle and thereby enable at least one animal to be exercised and/or controlled by a human being hands-free while the human being operates the vehicle.

### Background of the invention

Human beings have long-controlled animals such as pets with a leash that connects a human being and one or more animal together at a comfortable distance. A leash should allow for a certain degree of freedom in terms of movements by the animal and the human being respectively. Today, human beings are attaching their animals by leash to bicycles and other vehicles so that one or more animals are exercised while a human being concentrates on operating the vehicle. When a leash is connected to a vehicle and not directly to a human being, there can be a loss of feedback to the human being which can result in injury to an animal, a human being or both if an animal fails to maintain the same speed and direction as the vehicle. Where an animal lurches suddenly, it may be choked if its leash does not stretch or the stretching terminates abruptly. Energetic movement by a leashed animal may even interfere with a human being's ability to control her vehicle safely, for example by destabilizing a bicycle that is coasting near automobile traffic and causing the bicyclist to fall, if the leash fails to give way or its extensibility ceases without notice to the human being.

US patent application 12/319,312 discloses a tethering system between a bicycle and a pet, the tether having a rigid outer member.

US patent 2,737,154 discloses an expansible dog leash composed of an extensible material.

German patent application DE 202005015014.2 also discloses an elastic animal leash whereas US patent 4,777,784 focuses on the disclosure of a horse tether with a stretchable core surrounded by a braided sheath.

Clearly there is a need for leashes that provide elasticity in varying bands of resistance and without an abrupt termination of stretch so that feedback in terms of increasing resistance is imparted to both human being and leashed animal. Such leashes should dampen sudden movements to avoid shock loads near maximum extension and thereby reduce the prospect of injury to human being and animal alike. Nonetheless, leashes are by their nature a means to firmly control an animal when dangerous conditions arise, such as obstacles and moving traffic, thus, leashes when attached to a vehicle should have a rigid means curved to encourage an animal to develop and maintain a safe posture, position and distance in relation to the vehicle. The curvature described should be ergonomic so the human being can operate a vehicle without hindrance by the leash and the animal or animals leashed to the vehicle. Moreover, it is sometimes desirable for a single human being to exercise multiple animals while operating a vehicle, and so a means of attaching multiple leashes to a common assembly affixed to a single vehicle is advantageous. Further, the components of a leash, particularly when used in conjunction with a vehicle and its moving components, wear out over time and thus there is a particular need for an endpoint connector that reduces endpoint wear and can be opened or removed for maintenance, repair, adjustment and/or replacement in a convenient manner. The present invention addresses each concern above and it provides numerous advantages which will be readily apparent to one skilled in the art of the invention.

### Summary of the Invention

Various aspects and features of the present invention are defined in the claims.

Embodiments of the present invention seek to enable a cyclist to control one or more animals without using her hands.

Embodiments of the present invention have an elastic aspect which continually stretches and does not cease stretching abruptly, as may be the case with other leashes that incorporate a non-stretchable filament, line or cord to restrict the maximum extension length of the apparatus. In other words, as a dog or other animal lunges away from a bicycle to which it has been connected, the elasticity of the present invention contributed by its stretchable outer member and its stretchable inner member reduces the amount of shock experienced both by the animal and a connected vehicle operator, and the present invention provides gradually increasing tension, and thus feedback, as the animal begins to approach the maximum extension point of the leash. A vehicle operator is thus better enabled to maintain control of her vehicle.

Embodiments of the present invention have a rigid aspect with a curvature which encourages an animal connected to a vehicle to maintain a safe posture, distance and position in relation to the moving aspects of the vehicle, such as pedals, wheels and spokes.

Embodiments of the present invention have a rigid aspect having a curvature which, when the invention is attached to a bicycle, enables a bicyclist to operate the bicycle pedals without her legs striking the rigid aspect and generating pain.

Embodiments of the present invention seek to provide an endpoint connector which fits comfortably within a human hand for grasping and control purposes.

Embodiments of the present invention seek to provide for an endpoint connector into which can be inserted or, in the alternate withdrawn, one end of a stretchable outer member for convenient replacement and maintenance of the outer member or a contained stretchable inner member. This also can provide secure and reliable coupling among a stretchable outer member, a stretchable inner member, and the endpoint connector.

Embodiments of the present invention can accommodate a system of rings and stoppers that enable convenient adjustment to the amount of stretch contributed by a stretchable inner member.

Embodiments of the present invention provide that a leash can be positioned at different angles when attached to a vehicle and/or multiple leashes can be attached to a single vehicle, at the discretion and convenience of the vehicle operator. An apparatus for attaching an animal to a vehicle, according to the invention, is defined in claim 1 and comprises a removable attachment mechanism that secures the apparatus to a vehicle, a rigid outer member which incorporates a curvature, a stretchable outer member, a stretchable inner member substantially contained within the stretchable outer member, and an endpoint connector, whereby the rigid outer member is interposed between the attachment mechanism and the stretchable outer member, and whereby the stretchable outer member is interposed between the rigid outer member and the endpoint connector. The endpoint connector has an open first end into which may be inserted one end of the stretchable outer member for coupling the endpoint connector and stretchable outer member together. The endpoint connector has a second end which incorporates a means for attaching the endpoint connector to an animal or object.

In a preferred embodiment of the present invention, the endpoint connector is cylindrical and incorporates at its second end a swivel snap hook having a sliding bolt. In this embodiment the endpoint connector has a removable cover for accessing an internal space contained within the endpoint connector. In alternative embodiments, the endpoint connector does not incorporate a swivel snap hook but instead has any effective means for coupling the endpoint connector to an animal or object, such as a carabiner or a quick link. In alternative embodiments, the endpoint connector does not have a removable cover. In a preferred embodiment, the endpoint connector is manufactured of metal or metal alloy and the removable cover is manufactured of plastic. It being generally understood that any suitable material or combination of materials may be used for the endpoint connector.

In a preferred embodiment of the present invention, each end of the stretchable outer member has been inserted into a separate ring, and each end of the stretchable inner member has been inserted into a separate stopper. Moreover, each end of the stretchable inner member is tied into a knot as a means of securing the ends within the stoppers. The arrangement thus described retains the stretchable inner member substantially within the stretchable outer member and prevents escape of the stretchable inner member. Further, the arrangement nests a stopper, the stretchable inner member, the stretchable outer member, and a ring inside, at one end, the rigid outer member and inside, at the second end, the endpoint connector, such that the relationships among these components are maintained at all times. In alternative embodiments, the ends of the stretchable inner member may be affixed to the stoppers or held in friction against the stoppers instead of being inserted into them. In still other alternative embodiments, the invention does not incorporate rings, stoppers, or rings and stoppers. It being generally understood that all such arrangements maintain a predictable amount of stretchability as the stretchable outer member and the stretchable inner member are pulled at their respective ends and the stretchable outer member and the stretchable inner member stretch together.

In a preferred embodiment of the present invention, the stretchable outer member comprises a length of hollow tubing made of thermoplastic resin, latex rubber, or any suitable material that stretches. In alternative embodiments, the stretchable outer member comprises a length of hollow ribbon that is stretchable. In all embodiments, the dimensions of the stretchable outer member are those selected mindful of vehicle type and attributes, animal type and attributes, ease of manufacture, and desired performance parameters such as stretchability.

In a preferred embodiment of the present invention, the stretchable inner member comprises a length of bungee cord, shock cord, rubber band, thermoplastic resin, latex rubber, or any suitable material that stretches. In all embodiments, the dimensions of the stretchable inner member are those selected mindful of the composition of the stretchable outer member as well as its internal dimensions, vehicle type and attributes, animal type and attributes, ease of manufacture, and desired performance parameters such as stretchability, rates of resistance and recovery, and maximum distance permitted between animal and vehicle.

In a preferred embodiment of the present invention, one end of the stretchable outer member is contained within one end of the rigid outer member and the other end of the stretchable outer member is contained within one end of the endpoint connector. It being generally understood that alternative embodiments can have one end of the rigid outer member and one end of the stretchable outer member attached together without containment and/or the other end of the stretchable outer member attached to one end of the endpoint connector without containment, and the present invention still obtains.

In a preferred embodiment of the present invention, the rigid outer member comprises a length of rigid aluminum tube that has been curved. The rigid outer member in alternative embodiments can be manufactured from any suitable material such as carbon fiber, graphite, plastic, steel, and metal alloys provided that any such rigid outer member is rigid. A rigid outer member in alternative embodiments need not be tubular or contain a hollow space, it being generally understood that any embodiment will have its rigid outer member interposed between a removable attachment mechanism that is attached to a vehicle and a stretchable outer member containing a stretchable inner member. In a preferred embodiment, the end of the rigid outer member nearest to the removable attachment mechanism is covered with a grip, and the grip may be made of any suitable material, preferably NPVC, EPDM or Durablend foam.

In a preferred embodiment of the present invention, the removable attachment mechanism comprises two opposing plates configured to accommodate a durable, external component of a vehicle such that the removable attachment mechanism serves to anchor all elements of the invention to a single vehicle. In the preferred embodiment, each opposing plate incorporates a curvature that substantially conforms to a cylindrical component of a vehicle such as the seat post of a bicycle, and each opposing plate has an elongate projection. The opposing plates may be coupled together, in this preferred embodiment by four bolts that penetrate through four holes set in each plate with nuts securing each bolt. The rigid outer member can be slid over one elongate projection and secured in place using any appropriate fastening means, it being preferred to utilize a double wire snap pin whereby the pin penetrates through a hole in the elongate projection as well as through one or more holes in the rigid outer member. Alternative embodiments of the present invention do not utilize opposing plates for the removable attachment mechanism. These embodiments use any of a number of suitable means for attaching the invention to a vehicle, it being generally understood that all such means must be capable of being removed and/or reattached to a vehicle. One such alternative embodiment utilizes a cuff that fits over a durable external component of a vehicle. Other alternative embodiments use fasteners including screws and bolts.

The above and other objects, advantages, and novel features of the invention will be more fully understood from the following detailed description and the accompanying drawings, in which:

### Brief Description of the Drawings

Various objects and advantages of this invention will become apparent from all disclosures herein including the description that follows taken in relation to the accompanying drawings wherein are set forth, by way of illustration and example, certain embodiments of this invention. The drawings constitute a part of this disclosure, include exemplary embodiments of the present invention, and illustrate various objects and features thereof:
FIG. 1 is a view in perspective of a stretchable animal leash with endpoint connector in accordance with the present invention that shows the invention interposed between a bicycle and a dog;
FIG. 1A is a section view that shows an aspect of a preferred embodiment of the present invention where the invention has been attached to a bicycle seat post, in particular, the aspect shown depicts the removable attachment mechanism and the rigid outer member with foam grip;
FIG. 2 is a section view that shows a preferred embodiment of the present invention when seen from above;
FIG. 2A is a section view that shows the stretchable inner member contained within the stretchable outer member if cutaway;
FIG. 3 is a section view that shows the removable attachment mechanism, double wire snap pin, grip and rigid outer member in a preferred embodiment of the present invention; and
FIG. 4 is a section view that shows the endpoint connector incorporating a swivel snap hook with a sliding bolt and a removable cover as well as the stretchable inner member, stretchable outer member, a ring, and a stopper in a preferred embodiment of the present invention.

### Description of the Example Embodiments

Detailed embodiments of the present invention are disclosed herein; however, it is to be understood that the disclosed embodiments are merely exemplary of the invention, which may be embodied in various forms. Therefore, specific structural and functional details disclosed herein are not to be interpreted as limiting, but merely as a basis for claims and as a representative basis for teaching one skilled in the art to variously employ the present invention in virtually any appropriately detailed structure.

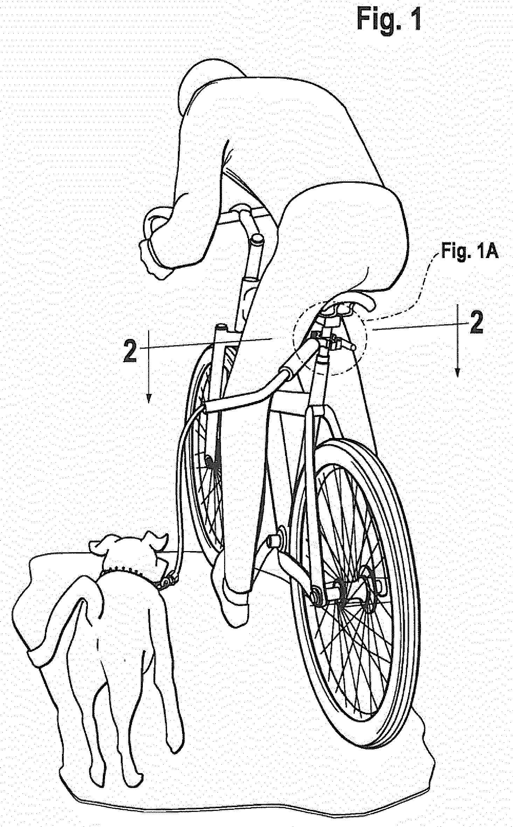

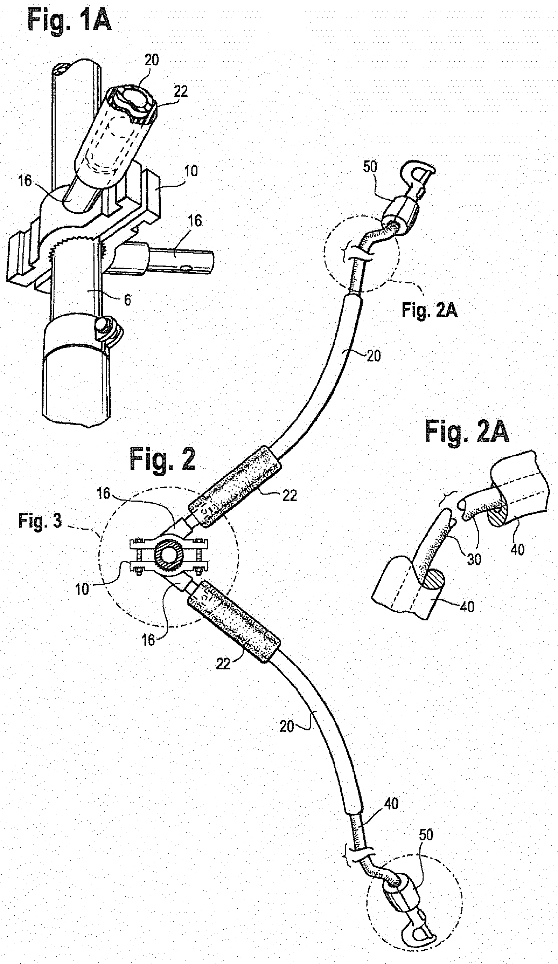

Embodiments of the present invention comprise an apparatus for attaching an animal to a vehicle whereby a removable attachment mechanism secures the apparatus to a vehicle, a rigid outer member incorporates a curvature that both positions an animal at a safe distance from said vehicle and does not interfere with operation of the vehicle, a stretchable outer member and a stretchable inner member that is substantially contained within the stretchable outer member, and an endpoint connector, whereby the rigid outer member is interposed between the attachment mechanism and the stretchable outer member, the stretchable outer member is interposed between the rigid outer member and an endpoint connector, and an animal and/or object is attached to the endpoint connector, all as shown in FIG. 1, which is a preferred embodiment.

The preferred embodiment of the present invention is shown in FIG. 1. The drawing depicts a seated bicyclist who operating the vehicle by pedaling, steering, and concentrating on the path ahead. The drawing also shows a small dog that is positioned safely proximate to the rearmost wheel of said moving bicycle, and the dog is receiving exercise as it matches the speed and direction of said bicycle. At all times depicted, the dog is attached to the bicycle and the bicyclist does not attend to the invention directly. The invention is shown in the aspect of the drawing between the seat post of the bicycle and the dog depicted.

FIG. 1 shows the preferred embodiment attached to the seat post of said bicycle. The seat post is substantially vertical in orientation relative to the dog and, in the instant drawing the seat post is shown as an extruded metal tube, although any suitable durable external vehicular component may serve to accept the invention. In the preferred embodiment, the seat post accepts the removable attachment mechanism, which appears in FIG. 1 within a dashed circle for illustration purposes. Said removable attachment mechanism is secured about the circumference of said seat post within the dimensions of removable attachment mechanism. In the preferred embodiment, the removable attachment mechanism consists of a first opposing plate and a second opposing plate both of metal or metal alloy, preferably aluminum or other metal alloy that is durable and light in weight and does not rust, which are coupled together, preferably, by four penetrating metal or metal alloy bolts that are each secured at one end by a metal or metal alloy nut. It is preferred that each said opposing plate measure approximately 4.5 centimeters height and 8 centimeters length, and each incorporates a curvature near its midpoint the inner surface of said curvarture contacting a portion of said bicycle seat post when the embodiment has been attached to the bicycle. Said curvature may incorporate on said inner surface a suitable surface material or pattern for increasing friction between the bicycle seat post and opposing plate. Each said opposing plate has an elongate projection, and a rigid outer member may be fitted over said elongate projection with said rigid outer member and said elongate projection secured together by a single penetrating double wire snap pin or other removable fastening means. It can be seen in FIG. 1 that said removable attachment mechanism can be rotated about said bicycle seat post to a desirable angle and thereafter said nuts can be tightened so said removable attachment mechanism is fixed at said angle.

FIG. 1A further illustrates a removable attachment mechanism 10 and rigid outer member when coupled together in the preferred embodiment. Bicycle seat post 6 is shown substantially vertical and a removable attachment mechanism 10 has been secured to said seat post 6. One elongate projection 16 is inserted into a rigid outer member 20, please note FIG. 1A only shows a part of said rigid outer member cutaway, with said rigid outer member 20 incorporating a curvature and being optionally covered with a grip 22. In the preferred embodiment, a rigid outer member 20 has a grip 22 so that rigid outer member 20 can be detached from removable attachment mechanism 10 and grasped by a human being to control an attached animal away from the vehicle, nonetheless, other embodiments can have different types of grip 22, or no grip 22, and the present invention still obtains. A preferred embodiment utilizes metal or metal alloy, such as an alloy with aluminum, zinc or titanium, for manufacture of removable attachment mechanism 10, however, any strong and durable material may be used, for example plastic, hard rubber, carbon fiber or wood.

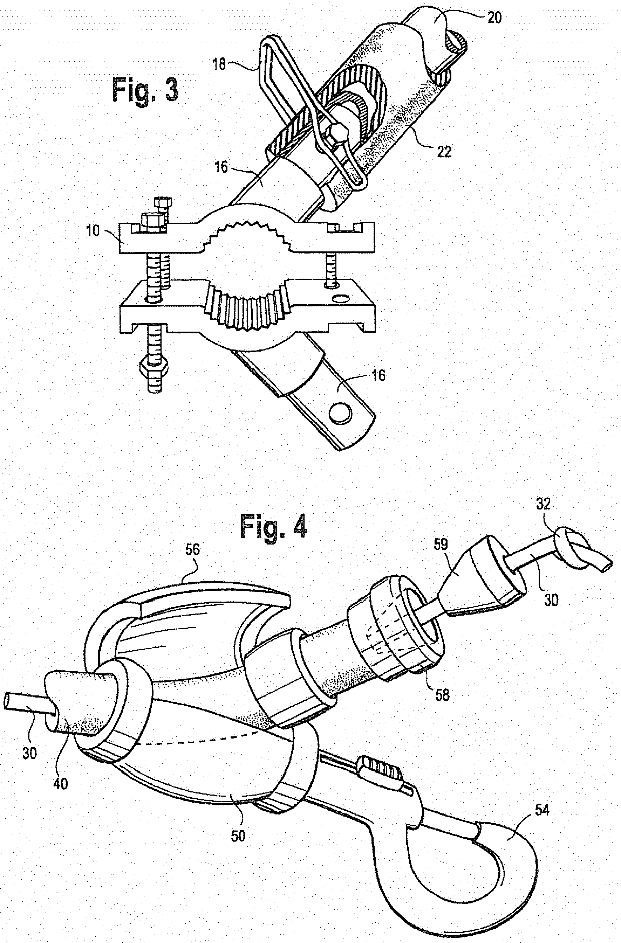

FIG. 2 shows the preferred embodiment of the present invention as such is being viewed from above while attached to a bicycle seat post. Rigid outer member 20 is shown alternately being placed on the left side or the right side of a bicycle, and a second rigid outer member 20 can be coupled to the attachment mechanism 10 so that two animals may be controlled and exercised at the same time by a single human being during operation of the bicycle. The curvature described, which need not be limited to a precise angle but is set at the time of manufacture, of rigid outer member 20 is depicted in the preferred embodiment. Likewise, rigid outer member 20 can have any suitable length, width or other dimensional attributes provided that rigid outer member 20 exhibits rigidity in relation to a stretchable outer member and a stretchable inner member (depicted in FIG. 2A). In preferred embodiments, rigid outer member 20 is made from metal or metal alloy, for example aluminum or steel, however, any suitable material having the quality of rigidity relative to the stretchable aspects of the invention, namely stretchable outer member 40 and stretchable inner member 30 will suffice. A preferred embodiment has its rigid outer member 20 approximately forty centimeters in length, nonetheless, such length need not be precise or a set value in order for the invention to obtain. In the preferred embodiment, rigid outer member 20 is covered by a grip 22 near one end and said end is coupled to removable attachment mechanism 10 by inserting an elongate projection 16 into said rigid outer member 20 so that two holes in rigid outer member 20 align with a channel through said elongate projection 16. A fastening means, in the preferred embodiment a double wire snap pin (depicted in FIG. 3), is inserted so that by passing through said holes and said channel said rigid outer member 20 is firmly but removably secured to said elongate projection 16 of said removable attachment mechanism 10.

A stretchable inner member 30 of the present invention is illustrated in FIG. 2A and in FIG. 4. Referring again to FIG. 2, the preferred embodiment is depicted with rigid outer member 20 interposed between removable attachment mechanism 10 and stretchable outer member 40. Rigid outer member 20 contributes firm control over an animal while stretchable outer member 40 and stretchable inner member 30 contribute elasticity and flexibility to the present invention. Stretchable outer member 40 and stretchable inner member 30 are shown as they are interposed between said rigid outer member 20 and endpoint connector 50. In the preferred embodiment, stretchable outer member 40 and stretchable inner member 30 are each approximately forty centimeters in length, nonetheless, practically any length a vehicle accommodates can be utilized and the invention still obtains.

FIG. 2A is a cutaway section drawing that illustrates stretchable outer member 40 substantially containing stretchable inner member 30 in the preferred embodiment. It should be noted that the ends of stretchable member 30 may protrude beyond the ends of stretchable outer member 20 without affecting the present invention. Conversely, said ends of stretchable member 30 may not so protrude. Stretchable inner member 30 and stretchable outer member 40 may be stretched by the tension created between an attached animal and a vehicle as they oppose one another, and stretchable inner member 30 and stretchable outer member 40 operate together to contribute varying bands of resistance during stretching. The combination of stretchable inner member 30 and stretchable outer member 40 reduces the risks presented by abrupt termination of stretching, and hence instant loss of elasticity, that would occur if stretchable inner member 30 was inelastic and did not stretch, as commonly is the case with other animal leashes. It should be noted that, as the combination of stretchable inner member 30 and stretchable outer member 40 stretches farther and farther under load, the resistance force that opposes the direction of the stretching increases and thereby generates feedback information to both attached animal and vehicle operator alike. At the same time, energetic movements by said animal are damped and the animal controlled. The combination of stretchable inner member 30 and stretchable outer member 40 in all embodiments of the present invention reduce the effects of sudden animal lunges and other energetic behavior, for example by preventing injury to an attached animal's body and/or damage to a vehicle or human being. Although FIG. 2A shows the preferred embodiment with stretchable inner member 30 being made of bungee cord and stretchable outer member 40 being made of elastic thermoplastic resin, one skilled in the pertinent art would know that any suitable stretchable material or materials may be utilized for stretchable inner member 30 as well as for stretchable outer member 40 without departing from the present invention provided a material stretches. Said material or materials should also have the quality of substantially returning to their status quo ante once they are no longer under tension.

FIG. 3 illustrates removable attachment mechanism 10 in the preferred embodiment when the present invention is not attached to a vehicle. Rigid outer member 20, and grip 22, has been situated over a single elongate projection 16 with said elements securely coupled by double wire snap pin 18. A second elongate projection 16 is shown without being coupled to rigid outer member 20. FIG. 3 further illustrates a first opposing plate and a second opposing plate of a removable attachment mechanism 10 insofar as the respective curvatures and friction surfaces of said first opposing plate and said second opposing plate appear in the preferred embodiment. In all embodiments of the present invention, said removable attachment mechanism 10 will be situated at one terminus of the invention and an endpoint connector will be situated at the other terminus.

Illustrated in FIG. 4 is endpoint connector 50 in the preferred embodiment of the present invention whereby said endpoint connector 50 is shown to have a swivel snap hook with sliding bolt 54 at one end of said endpoint connector 50 and an opening at the opposite end which admits both stretchable outer connector 40 and stretchable inner connector 30. In the preferred embodiment, cover 56 may be alternatively opened or closed to allow access inside endpoint connector 50, it being observable that a different cover or more than one cover, or no cover, may be utilized without departing from the present invention by alternative embodiments. As depicted for the preferred embodiment in FIG. 4, cover 56 has been opened so that a length of stretchable outer member 40 is exposed at one end. A ring 58 has been placed over stretchable outer member 40. Stretchable inner member 30 has been inserted through a stopper 59 and tied into a knot 32 at one end. Although not shown, it should be noted the opposite end of said stretchable outer member 40 has been inserted into a second ring 58, the opposite end of said stretchable inner member 30 has been inserted into a second stopper 59, and the assembly thus described having been inserted into a rigid outer member 20, in the preferred embodiment. The preferred combination of rigid outer member 20, endpoint connector 50, stretchable outer member 40, stretchable inner member 30, a first ring 58, a second ring 58, a first stopper 59, and a second stopper 59 securely maintains corresponding stretch and physical relationships between stretchable outer member 40 and stretchable inner member 30 when the invention is under load. While said combination is the preferred embodiment, differing embodiments can be used provided they maintain corresponding stretch and physical relationships between stretchable outer member 40 and stretchable inner member 30 when the apparatus is under tension without departing from the present invention, as may be readily seen in FIG. 4.

From the foregoing, it will be observed that numerous variations and modifications may be effected without departing from the scope of the invention. It is to be understood that no limitation with respect to the specific apparatus herein is intended or should be inferred. It is, of course, intended to cover by the appended claims all such modifications as fall within the scope of the claims.

## Claims

1. An apparatus in the form of a leash for attaching an animal to a vehicle comprising:
a removable attachment mechanism (10) for attaching the apparatus at one end to a vehicle, a rigid outer member (20) which incorporates a curvature, a stretchable outer member (40), a stretchable inner member (30), said stretchable inner member (30) substantially contained within said stretchable outer member (40),
said rigid outer member (20) interposed between said attachment mechanism (10) and a substantial length of said stretchable outer member (40), said stretchable inner member (30) and said stretchable outer member (40) interposed between said rigid outer member (20) and an endpoint connector (50),
said endpoint connector (50) attachable to an animal or to an object.

2. The apparatus of claim 1 whereby said removable attachment mechanism (10) is comprised of two opposing plates coupled together, and said rigid outer member (20) incorporates a curvature of between two and ninety degrees sweep.

3. The apparatus of claim 1 whereby said rigid outer member (20) is a length of rigid hollow tube, said stretchable outer member (40) is a length of stretchable hollow tube, and said stretchable inner member (30) is a length of stretchable bungee cord.

4. The apparatus of claim 1 whereby each end of said stretchable outer member (40) has been inserted into a ring (58), and each corresponding end of said stretchable inner member (30) has been inserted into a stopper (59), such that each end of said stretchable inner member (30) is prevented from entering said stretchable outer member (40) when the apparatus experiences tension.

5. The apparatus of claim 1 whereby said endpoint connector (50) incorporates a swivel snap hook with sliding bolt (54) at one end and an opening that accepts said stretchable outer member (40) and said stretchable inner member (30) at the opposite end of said endpoint connector (50).

## Patentansprüche

1. Eine Vorrichtung in Form einer Leine zum Anbinden eines Tieres an ein Fahrzeug, umfassend:
Einen entfernbaren Befestigungsmechanismus (10) zum Befestigen der Vorrichtung an einem Ende an ein Fahrzeug,
ein starres äußeres Element (20), welches eine Krümmung umfasst,
ein dehnbares äußeres Element (40)
ein dehnbares inneres Element (30)
wobei das dehnbare innere Element (30) im Wesentlichen innerhalb des dehnbaren äußeren Elements (40) enthalten ist,
wobei das starre äußere Element (20) zwischen dem Befestigungsmechanismus (10) und einer erheblichen Länge des dehnbaren äußeren Elements (40) zwischengeschaltet ist,
wobei das dehnbare innere Element (30) und das dehnbare äußere Element (40) zwischen dem starren äußeren Element (20) und einem Endpunktverbinder (50) zwischengeschaltet sind,
wobei sich der Endpunktverbinder (50) an ein Tier oder an einen Gegenstand anbringen lässt.

2. Die Vorrichtung nach Anspruch 1, wobei der entfernbare Befestigungsmechanismus (10) aus zwei miteinander verbundenen gegenüberliegenden Platten besteht und das starre äußere Element (20) eine Krümmung von zwischen zwei und neunzig Bogengrad umfasst.

3. Die Vorrichtung nach Anspruch 1, wobei das starre äußere Element (20) eine Länge aus starrem Hohlrohr ist, das dehnbare äußere Element (40) eine Länge aus dehnbarem Hohlrohr ist und das dehnbare innere Element (30) eine Länge aus dehnbarem Gummiseil ist.

4. Die Vorrichtung nach Anspruch 1, wobei jedes Ende des dehnbaren äußeren Elements (40) in einen Ring (58) eingefügt worden ist und jedes entsprechende Ende des dehnbaren inneren Elements (30) in einen Anschlag (59) eingefügt worden ist, derart, dass jedes Ende des dehnbaren inneren Elements (30) daran gehindert wird, in das dehnbare äußere Element (40) einzudringen, wenn die Vorrichtung Spannung wahrnimmt.

5. Die Vorrichtung nach Anspruch 1, wobei der Endpunktverbinder (50) einen Schwenkkarabiner mit einem Riegel (54) an einem Ende und eine Öffnung, die das dehnbare äußere Element (40) und das dehnbare innere Element (30) aufnimmt, am entgegengesetzten Ende des Endpunktverbinders (50) umfasst.

## Revendications

1. Appareil sous la forme d'une laisse pour attacher un animal à un véhicule, comprenant :
un mécanisme d'attache amovible (10) pour attacher l'appareil au niveau d'une extrémité à un véhicule,
un élément externe rigide (20) qui incorpore une courbure,
un élément externe étirable (40),
un élément interne étirable (30),
ledit élément interne étirable (30) étant sensiblement contenu au sein dudit élément externe étirable (40),
ledit élément externe rigide (20) étant interposé entre ledit mécanisme d'attache (10) et une longueur sensible dudit élément externe étirable (40),
ledit élément interne étirable (30) et ledit élément externe étirable (40) étant interposés entre ledit élément externe rigide (20) et un raccord de point d'extrémité (50),
ledit raccord de point d'extrémité (50) étant apte à être attaché à un animal ou à un objet.

2. Appareil selon la revendication 1, en vertu duquel ledit mécanisme d'attache amovible (10) se compose de deux plaques opposées couplées ensemble, et ledit élément externe rigide (20) incorpore une courbure se situant entre deux et quatre-vingt-dix degrés d'envergure.

3. Appareil selon la revendication 1, en vertu duquel ledit élément externe rigide (20) est une longueur de tube creux rigide, ledit élément externe étirable (40) est une longueur de tube creux étirable, et ledit élément interne étirable (30) est une longueur de tendeur élastique étirable.

4. Appareil selon la revendication 1, en vertu duquel chaque extrémité dudit élément externe étirable (40) a été insérée dans un anneau (58), et chaque extrémité correspondante dudit élément interne étirable (30) a été insérée dans un dispositif d'arrêt (59), de telle sorte que chaque extrémité dudit élément interne étirable (30) ne puisse pas pénétrer dans ledit élément externe étirable (40) lorsque l'appareil rencontre une tension.

5. Appareil selon la revendication 1, en vertu duquel ledit raccord de point d'extrémité (50) incorpore un crochet encliquetable à pivot avec un boulon coulissant (54) au niveau d'une extrémité, et une ouverture qui accepte ledit élément externe étirable (40) et ledit élément interne étirable (30) au niveau de l'extrémité opposée dudit raccord de point d'extrémité (50).
